# EUROPÄISCHE PATENTSCHRIFT

(11) **EP 0 796 690 B1**
(45) Veröffentlichungstag und Bekanntmachung des Hinweises auf die Patenterteilung: **10.04.2002**
(21) Anmeldenummer: 96120129.0
(22) Anmeldetag: 14.12.1996
(51) Int. Cl.: B23C 3/34, B23C 5/10, B23C 3/28

(54) **Vorrichtung und Verfahren zur Herstellung von hinterschnittenen Nuten**
Device and method to make undercut grooves
Dispositif et méthode à usiner des rainures à chambrage

(30) Priorität: 22.03.1996 DE 19611276
(43) Veröffentlichungstag der Anmeldung: 24.09.1997
(73) Patentinhaber: WALTER AG, 72072 Tübingen (DE)
(72) Erfinder: Daub, Jürgen, 72108 Rottenburg (DE)
(74) Vertreter: Patentanwälte Rüger, Barthelt & Abel

(56) Entgegenhaltungen:
- EP-A- 0 700 744
- DE-A- 19 607 230
- FR-A- 2 270 045
- SCHULTE: "Numerisch gesteurtes Rotornut-Fräsen" VDI Z., Bd. 126, Nr. 5 , März 1984, DUSSELDORF DE, Seiten 128-131, XP002062025

## Beschreibung

Die Erfindung betrifft eine Vorrichtung sowie ein Verfahren zur Herstellung hinterschnittener Nuten, insbesondere zur Herstellung von geraden und schrägen Nuten mit Tannenbaumprofil zur Befestigung von Schaufeln an Turbinenrotoren oder dergleichen.

Turbinenrotore weisen meist einen zylindrischen Grundkörper auf, der mit mehreren scheibenförmigen, radial nach außen vorstehenden Abschnitten (Schaufelträgerabschnitten) versehen ist. Diese koaxial zu dem übrigen zylindrischen Turbinenrotor angeordneten Abschnitte sind entlang ihres Umfanges mit einer Vielzahl sich axial oder schräg zur Axialrichtung erstreckender profilierter Nuten versehen. Die Nuten dienen der Befestigung eines entsprechend geformten Schaufelfußes und müssen zur Vermeidung von lokalen Überlastungen sowie um eine präzise Halterung der jeweiligen Turbinenschaufel sicherzustellen, formgenau, d.h. mit geringer Toleranz von bspw. 0,01 mm, gefertigt sein.

Die Herstellung der Nute erfolgt meist in einem Fräsbearbeitungsvorgang, wie er in Köllmann: "Methoden und Maschinen zur Fräsbearbeitung von Generator- und Turbinenrotoren", Sonderdruck Nr. 9, Köllmann Maschinenbau GmbH, 5602 Langenberg/Rheinland, beschrieben ist. Der entsprechende Rohling wird hier auf einer Aufspann- und Teilvorrichtung gelagert, die der Positionierung des Rohlings zum Fräsen der einzelnen Nuten dient. Die Herstellung einer Nut beinhaltet dabei mehrere Bearbeitungsschritte. In einem ersten solchen Bearbeitungsschritt wird die Nut mit einem Scheibenfräser in einem Schruppfräsvorgang geöffnet. Dabei wird eine hinterschneidungsfreie, die spätere, d.h. gewünschte, Nutform lediglich grob annähernde Kontur ausgebildet. Es dient dazu ein Scheibenfräser, der in einer Vorschubbewegung in Längsrichtung zu der zu öffnenden Nut durch das Werkstück geführt wird. In einem zweiten Bearbeitungsschritt, der Fertigbearbeitung von Gerad- oder Schrägnuten, wird ein HSS-Schaft- oder Formfräser (HSS: Hochleistungsschnellstahl) mit höchster Präzision in Längsrichtung durch die Nut geführt, um die gewünschte tannenbaumförmige Nut mit einem Formfehler von weniger als 0,01 mm auszubilden. In diesem Fräsbearbeitungsschritt werden an den Flanken der grob geschruppten (vorgeöffneten) Nut längsverlaufende Hinterschneidungen ausgebildet, die das typische Tannenbaumprofil im Querschnitt ergeben.

Der Vorschub des HSS-Formfräsers erfolgt in Längsrichtung, wobei ein relativ großer Materialabtrag, insbesondere in den auszubildenden Hinterschneidungsbereichen, erforderlich ist. Die erreichbare Vorschubgeschwindigkeit ist dabei naturgemäß begrenzt, wobei Werte zwischen 40 und 80 mm/min. erreicht werden. Umgekehrt kann eine gewisse Mindestbearbeitungszeit für jede Einzelnut nicht unterschritten werden. Aufgrund der großen Anzahl der an dem Umfang des Turbinenrotors auszubildenden Nuten ergibt sich somit eine beträchtliche Gesamtbearbeitungszeit des Turbinenrotors, was sich in den Kosten niederschlägt.

Eine weitere Problematik ergibt sich im Zusammenhang mit den HSS-Schaftfräsern. Deren Schliff bestimmt die erreichbare Genauigkeit der Nuten beim Formfräsen. Dies bedeutet, daß ein HSS-Schaftfräser jeweils nachgeschliffen werden muß, bevor er durch Verschleiß eine deutliche Formabweichung zeigt. Es ist deshalb ein relativ hoher Werkzeugbestand erforderlich, um sicherzustellen, daß bei der Fräsbearbeitung jederzeit ausreichend scharfe und wenigstens näherungsweise formhaltige Werkzeuge vorhanden sind, während sich die abgearbeiteten oder verschlissenen HSS-Schaftfräser in einer entsprechend eingerichteten Schleiferei befinden. Darüber hinaus wird beim Nachschleifen, das an den Spanflächen erfolgt, infolge der spitzwinkligen Einstellung der Freiflächen zu der Umfangsrichtung eine Formabweichung des Fräsers erzeugt.

Aus der erstgenannten Problematik leitet sich die der Erfindung zugrundeliegende Aufgabe ab, ein Zerspanungswerkzeug zur Herstellung hinterschnittener Nuten sowie ein Verfahren dazu zu schaffen, die eine Verkürzung der Bearbeitungszeit gestatten. Darüber hinaus ist es Aufgabe der Erfindung, ein Zerspanungswerkzeug und ein Zerspanungsverfahren zu schaffen, die eine höhere Lebensdauer des jeweiligen Zerspanungswerkzeuges ermöglichen.

Insbesondere die erstgenannte Aufgabe wird durch ein Zerspanungswerkzeug nach Anspruch 1 sowie ein Verfahren zur Herstellung hinterschnittener Nuten mit den Merkmalen des Patentanspruchs 20 gelöst.

Es ist gemäß Anspruch 1 ein Zerspanungswerkzeug vorgesehen, dessen Schneidkanten, je nach dem, in welcher Richtung diese liegen, unterschiedliche Schneidenzahlen definieren. Bspw. weist das Zerspanungswerkzeug an seinem Umfang Schneidkanten auf, die parallel zu der mit der Längsmittelachse übereinstimmenden Drehachse orientiert sind. Bei einem Profil-Schaftfräser zur Ausarbeitung einer Nut mit Tannenbaumprofil sind dies relativ kurze Schneidkanten jeweils an seinen Zahnspitzen. Diese Schneidkanten sind rechtwinklig zur Vorschubrichtung orientiert, die radial zu der Drehachse (Längsmittelachse) des Werkzeugkörpers gerichtet ist. Sich an die Zahnspitzen anschließende Schneidkanten schließen sowohl mit der Drehachse als auch mit der Vorschubrichtung einen spitzen Winkel ein. Die an den Zahnspitzen vorhandenen, parallel zu der Längsmittel- oder Drehachse (rechtwinklig zur Vorschubrichtung) ausgerichteten Schneidkanten definieren eine Schneidenzahl, die größer ist als jede von den schräg orientierten Schneidkanten definierte Schneidenzahl. Auf die Drehachse bezogen bedeutet dies, daß die Schneidenzahl von Schneidkanten mit kleinem Winkel zu der Drehachse (spitzer Winkel, der auch Null sein kann) größer ist als die Schneidenzahl von jeder Schneidkante, die mit der Drehachse einen vergleichsweise größeren Winkel einschließt. Bezogen auf die Vorschubrichtung gilt, daß jede rechtwinklig oder mit relativ großem spitzen Winkel zu der Vorschubrichtung liegende Schneidkante eine höhere Schneidenzahl definiert als jede Schneidkante, die mit der Vorschubrichtung einen betragsmäßig kleineren spitzen Winkel einschließt.

Durch diese Maßnahme wird erreicht, daß die Spandikke an allen Schneidkanten etwa gleich groß ist. Die gegenüber der übrigen Schneidenzahl vergrößerte Anzahl der rechtwinklig oder mit geringer Abweichung davon zu der Vorschubrichtung orientierten Schneidkanten ermöglicht es somit, die Vorschubgeschwindigkeit zu erhöhen. Dies ergibt letztlich eine Verkürzung der Bearbeitungszeit einer einzelnen Nut, was sich aufgrund der großen Nutzahl bei Turbinenrotoren gegenüber herkömmlichen Bearbeitungsverfahren zu einem insgesamt beträchtlichen Zeitgewinn summiert. Sind bspw. die schräg angeordneten Schneidkanten in einem Winkel von ungefähr 45° zu der Drehachse angeordnet und beträgt die Schneidenzahl im spitzen Bereich der Zähne z = 2 sowie im übrigen Bereich z = 1, kann im Vergleich zu einem Werkzeug mit einer einzelnen Schneide (z = 1) mit doppeltem Vorschub gefahren werden, was 50% Zeiteinsparung ergibt.

Vorteilhafte Ausführungsformen sind Gegenstand der Unteransprüche.

Eine insbesondere vorteilhafte Ausführungsform wird erhalten, wenn der Werkzeugkörper mit Schneideinsätzen versehen ist. Dies sind vorzugsweise Wendeschneidplatten, die lösbar mit dem Werkzeugkörper verbunden sind. Wendeschneidplatten ermöglichen eine hohe Zerspanungsleistung und somit eine im Vergleich zu HSS-Formfräsern sehr hohe Vorschubgeschwindigkeit. Bei Verschleiß können Platten ausgetauscht oder gewendet werden, so daß die Formhaltigkeit des betreffenden Zerspanungswerkzeuges auf einfache Weise sichergestellt werden kann. Es ist insbesondere vorteilhaft, die Wendeschneidplatten zu "entflechten". Dies bedeutet, daß an jeder Wendeschneidplatte lediglich eine Hauptschneidkante und die benachbarte Schneidkante, die an der Zahnspitze angeordnet sind, aktiv sind. Erst die Überlappung der Schneidkanten in Umfangsrichtung hintereinander angeordneter Wendeschneidplatten ergibt eine vollständige Schneide im Flankenbereich sowie zwei Schneiden im Zahnspitzenbereich. Die mit einer solchen Anordnung beim Zerspanen erzeugten Späne sind, weil sie hauptsächlich von der vorzugsweise gerade ausgebildeten Hauptschneidkante und der kurzen, sich anschließenden, benachbarten Schneidkante abgehoben werden, im wesentlichen flach und somit flexibel. Dies kommt der Spanführung entgegen.

Bei einem Zerspanungswerkzeug der genannten Bauform sind die Plattensitze an den Werkzeugkörper, vorzugsweise einer Spiral- oder Schraubenlinie folgend, angeordnet. Damit wird erreicht, daß die Wendeschneidplatten beim Zerspanungsvorgang nicht gleichzeitig sondern nacheinander mit dem Werkstück in Eingriff kommen, was eine ruhige Bearbeitung, d.h. einen weichen Schnittvorgang, ermöglicht.

Die Spanräume einzelner Wendeschneidplatten sind voneinander separiert. Dadurch werden die abgehobenen Späne getrennt geführt, ohne daß sie sich gegenseitig oder miteinander verhaken können.

Zwischen den Spanräumen können an dem Werkzeugkörper Versteifungsrippen ausgebildet sein, die zum Separieren der Spanräume und zum Aussteifen des Werkzeugkörpers dienen. Damit ist eine erhöhte Bearbeitungsgenauigkeit erzielbar.

Bei dem Verfahren zum Herstellen hinterschnittener Nuten wird zusätzlich zu den aus dem Stand der Technik bekannten Bearbeitungsschritten, nämlich dem Öffnen der Nut und dem Schlichten der Nut, ein zusätzlicher Bearbeitungsschritt ausgeführt, der zwischen dem Schruppen (Öffnen der Nut) und dem Schlichten ausgeführt wird. Dieser zusätzliche Schritt ist das Vorschlichten der Nut, bei dem die gewünschte Nut mit einem konstanten Unter- bzw. Aufmaß ausgebildet wird. Im Schlichtbearbeitungsvorgang ist dann eine einheitliche Materialdicke abzutragen, was den Werkzeugverschleiß senkt und über die gesamte Länge der Schneiden des Schlichtbearbeitungswerkzeuges auf ein einheitliches Maß bringt. Damit wird die Standzeit des Schlichtbearbeitungswerkzeuges verbessert. Außerdem kann die Vorschubgeschwindigkeit wegen der im Schlichtbearbeitungsvorgang lediglich noch geringen abzutragenden Materialmenge vergrößert werden, so daß die Bearbeitungszeit deutlich gesenkt wird.

Der Vorschlichtschritt wird vorzugsweise mit einem wendeschneidplattenbestückten Profil-Schaftfräser durchgeführt. Dieser ermöglicht eine hohe Vorschubgeschwindigkeit infolge der erreichbaren hohen Zerspanungsleistung mit Wendeschneidplatten.

In der Zeichnung ist ein Ausführungsbeispiel der Erfindung dargestellt. Es zeigen:
- Fig. 1: einen Schaftfäser zur Vorschlichtbearbeitung von Profilnuten, in perspektivischer Darstellung,
- Fig. 2: den Profil-Schaftfräser nach Fig. 1, mit einem Werkstück im Eingriff befindlichen Wendeschneidplatten, in einer schematisierten Seitenansicht und in einem anderen Maßstab,
- Fig. 3: eine Wendeschneidplatte des Profil-Schaftfräsers nach den Fig. 1 und 2, in Schnittdarstellung und in einem anderen Maßstab,
- Fig. 4: die Wendeschneidplatte nach Fig. 3 in Draufsicht,
- Fig. 5 und 6: die Wendeschneidplatte nach Fig. 4 in einer Seitenansicht mit Blickrichtung auf ihre jeweiligen Freiflächen,
- Fig. 7: zwei zusammenwirkende, in Umfangsrichtung übereinanderprojizierte Wendeschneidplatten in ihrem Zahnspitzenbereich, in ihrer geometrischen Zuordnung zueinander und in Bezug auf das gewünschte Nutprofil, in schematischer Darstellung und in vergrößertem Maßstab,
- Fig. 7A: einen von dem Profil-Schaftfräser nach den Fig. 1 und 2 mit den geometrischen Verhältnissen der Schneidkante gemäß Fig. 7 erzeugten Span in schematisierter Querschnittsdarstellung,
- Fig. 8: ein Werkstück mit einer mittels eines Scheibenfräsers geöffneten Nut, die eine hinterschneidungsfreie Grobkontur der zu erzeugenden Nut ist, in schematisierter Darstellung,
- Fig. 9: das Werkstück nach Fig. 8 nach Ausführung eines sich an das Öffnen der Nut anschließenden Vorschlichtarbeitsganges, in schematisierter Darstellung; und
- Fig. 10: einen Turbinenrotor mit flanschartig ausgebildeten, zylindrischen Abschnitten, an denen Hinterschneidungen aufweisende Nuten ausgebildet sind, in schematisierter und verkleinerter Darstellung.

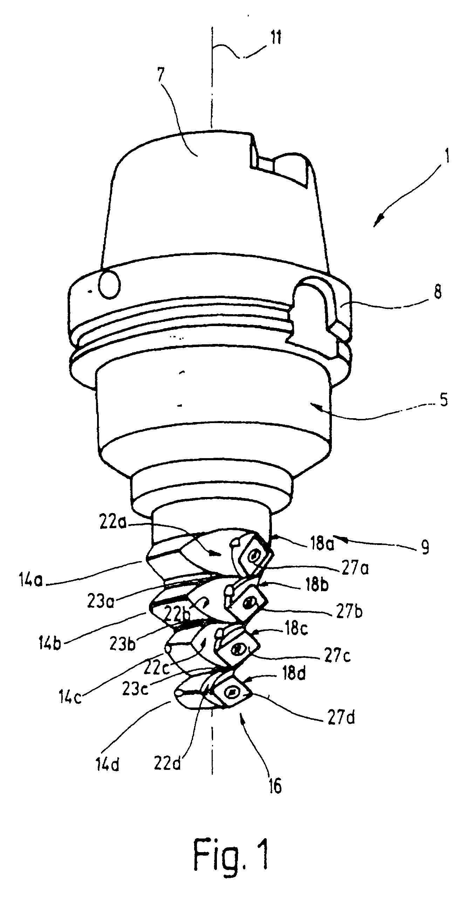

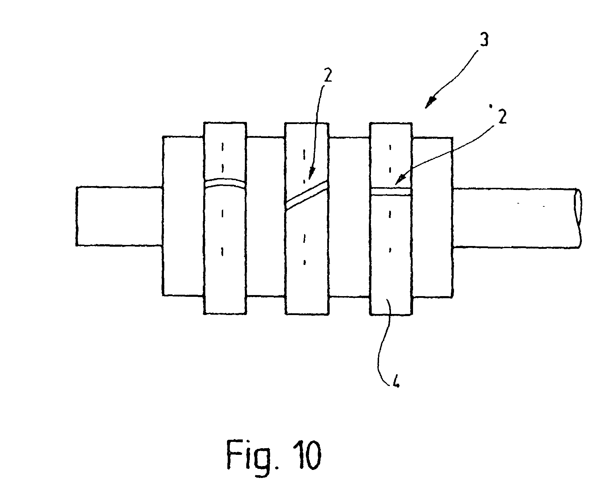

In Fig. 1 ist ein als Profil-Schaftfräser 1 ausgebildetes Zerspanungswerkzeug veranschaulicht, wie es zum Vorschlichten hinterschnittener Nuten 2 (Fig. 10) zu verwenden ist. Die Nuten 2 sind Befestigungsnuten für Turbinenschaufeln eines Turbinenrotors 3, insbesondere für Dampfturbinen. Die Nuten 2 sind dabei an zylindrischen Abschnitten 4 des Turbinenrotors 3 vorgesehen, die in Radialrichtung über den übrigen Turbinenrotor 3 vorstehen, so daß die Nuten 2 jeweils an ihren beiden Enden offen sind.

Der Profil-Schaftfräser 1 weist gemäß Fig. 1 einen Werkzeugkörper 5 auf, der, ausgehend von einer zylindrischen Grundform, an seinem einen, in Fig. 1 oberen Ende mit einem Kegel zur Halterung in einer Werkzeugaufnahme oder Spindelaufnahme versehen ist. Der Kegel 7 ist vorzugsweise als Hohlschaftkegel oder Steilkegel ausgebildet. An den Kegel 7 schließt sich ein mit einer Umfangsnut versehener, im wesentlichen zylindrischer Handhabungsabschnitt 8 an, von dem sich ein profilierter Wendeplatten-Trägerabschnitt 9 weg erstreckt. Der Wendeplatten-Trägerabschnitt 9 ist wie die übrigen Abschnitte 7, 8 des Werkzeugkörpers 5 koaxial zu einer Längsmittelachse 11 angeordnet, die im Gebrauch des Profil-Schaftfräsers 1 mit seiner Drehachse übereinstimmt.

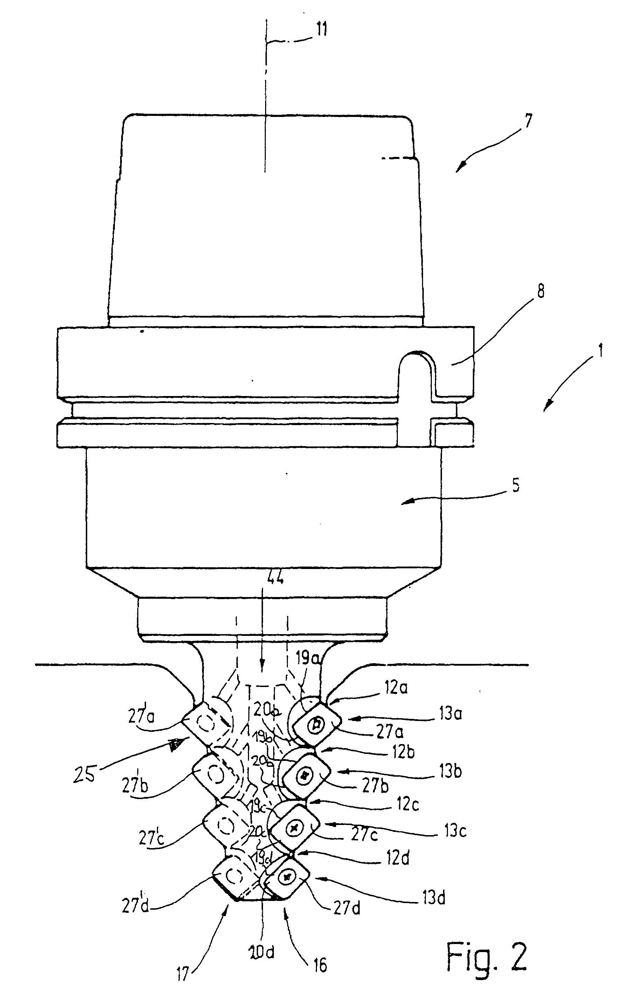

Der Wendeplatten-Trägerabschnitt 9 weist eine im Längsschnitt im wesentlichen mit dem Querschnitt der zu erzeugenden Nut bis auf ein gewisses Untermaß übereinstimmende Außenkontur auf. Bei der im Beispiel zu erzeugenden, aus Fig. 2 ersichtlichen Nut 2 mit Tannenbaumprofil, die an ihren Nutflanken 4 in den Nutinnenraum vorstehende, in Nutlängsrichtung verlaufende Rippen 12 (12a bis 12d) mit dazwischenliegenden, längsverlaufenden Vertiefungen 13 (13a bis 13d) aufweist, ist der Wendeplatten-Trägerabschnitt 9, ausgehend von einer kegelstumpfförmigen Grundform, mit insgesamt vier voneinander in Axialrichtung beabstandeten, in Umfangsrichtung verlaufenden Radialvorsprüngen oder sich in Umfangsrichtung erstreckenden Ringwülsten 14 (14a bis 14d) versehen. Jede Ringwulst 14 bildet jeweils einen Abschnitt, der zur Ausarbeitung einer der Vertiefungen 13 dient. Dazu ist der Wendeplatten-Trägerabschnitt 9 mit zwei Wendeplattenreihen 16, 17 versehen, die jeweils auf einer Spirale mit angepaßter Steigung angeordnet sind.

Zu der Wendeplattenreihe 16 gehören insgesamt vier Plattensitze 18 (18a bis 18d). Dabei ist in der Wendeplattenreihe 16 bei jeder Ringwulst 14 genau ein Plattensitz 18 (18a bis 18d) angeordnet, der die Ringwulste 14 (a bis d) unterbricht. Jeder Plattensitz 18 ist mit einer in Radial- und Axialrichtung ausgerichteten Auflagefläche versehen, an die sich zwei im Winkel zueinander und zu der Auflagefläche stehende Anlageflächen 19, 20 (a bis d) anschließen. Außerdem ist, wie aus Fig. 1 hervorgeht, jedem Plattensitz 18 eine in Drehrichtung des Profil-Schaftfräsers 1 vorn liegende, die Ringwulst 14 unterbrechende Ausnehmung 22 (22a bis 22d) zugeordnet, die als Spanraum dient. Die Ausnehmungen 22a bis 22d sind voneinander durch Rippen oder Stege 23 (23a bis 23c) getrennt, die einen Übergang eines Spanes aus einem Spanraum in den jeweils benachbarten verhindern und zusätzlich eine Aussteifung des Profil-Schaftfräsers 1 in seinem Wendeplatten-Trägerabschnitt 9 bewirken.

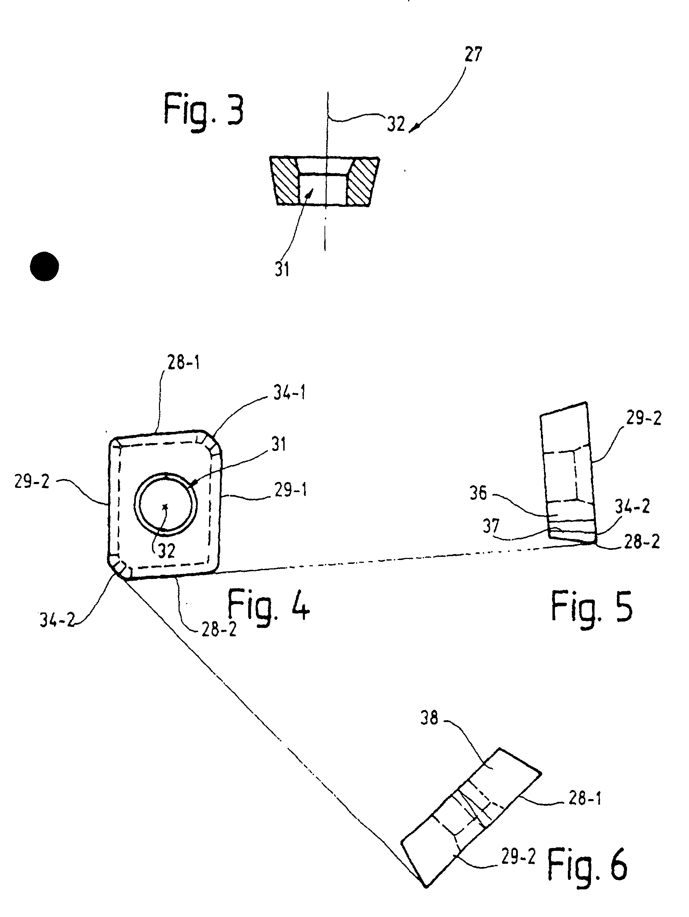

Die Wendeplattenreihe 17 ist bezüglich der Längsmittelachse 11 liniensymmetrisch zu der Wendeplattenreihe 16 ausgebildet und die Beschreibung der Wendeplattenreihe 16 gilt entsprechend für die Wendeplattenreihe 17. Dem Plattensitz 18 (18a bis 18d) ist jeweils ein Plattensitz 25 der Wendeplattenreihe 17 paarweise zugeordnet. An dem Plattensitz 18 und an dem Plattensitz 25, auf deren genaue Auslegung an späterer Stelle zurückgekommen wird, sind miteinander übereinstimmende Wendeschneidplatten 27 (27a bis 27d), 27' (27'a bis 27'd) gehalten, die aus den Fig. 3 bis 6 hervorgehen. Die Wendeschneidplatte 27 weist, wie in Fig. 4 veranschaulicht ist, insgesamt vier auf den Kanten eines Parallelogrammes angeordnete Hauptschneidkanten 28-1, 28-2, 29-1, 29-2 auf. Außerdem ist die Wendeschneidplatte 27 liniensymmetrisch zu einer die Mittelachse einer Befestigungsöffnung 31 definierenden Geraden 32 ausgebildet. Nachfolgende Bezugnahmen auf Hauptschneidkanten 28, 29 beziehen sich jeweils auf beide Hauptschneidkanten 28-1, 28-2 sowie 29-1 und 29-2.

In dem zwischen den Hauptschneidkanten 28, 29 eingeschlossenen Eckenbereich gehen die Hauptschneidkanten 28, 29 mit einer Rundung in eine kurze, gerade ausgebildete Eckenschneidkante 34 (34-1, 34-2) über. An eine durchgehende, in Fig. 4 in Draufsicht sichtbare Spanfläche schließen sich, wie aus den Fig. 5 und 6 hervorgeht, Freiflächen 36, 37, 38 an, die in einem spitzen Winkel zu der Spanfläche stehen und so ausgerichtet sind, daß die an dem Profil-Schaftfräser 1 ausgebildeten Freiwinkel alle positiv sind.

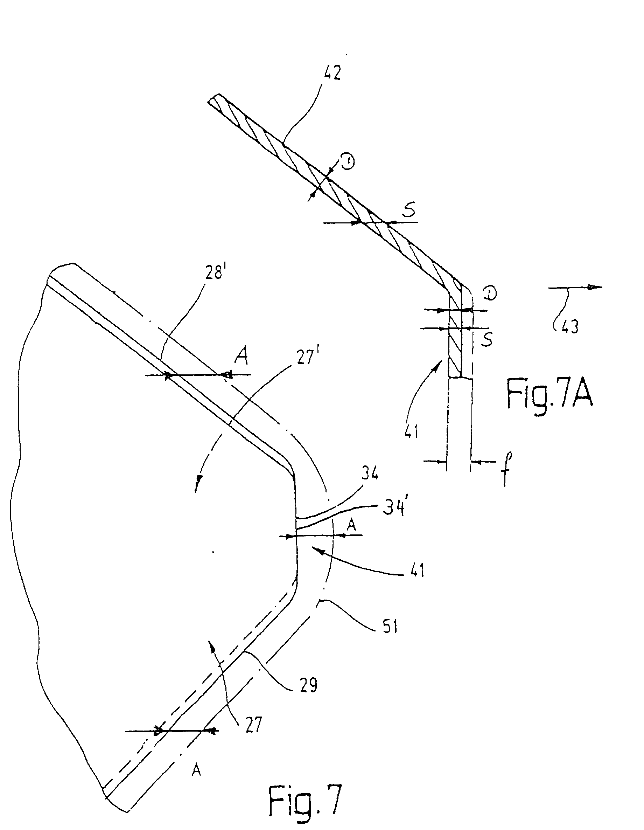

Die Ausbildung jeweils zweier, einander in Umfangsrichtung überlappender Plattensitze 18, 25 und insbesondere ihre radiale sowie ihre axiale Ausrichtung zueinander ergibt sich aus Fig. 7 (gilt jeweils für Plattensitzpaare 18a, 25a; 18b, 25b; 18c, 25c; 18d, 25d). Während die Plattensitze 18, 25 einander paarweise diametral gegenüberliegen, sind die Anlageflächen 19, 20 (Fig. 2) in Axialrichtung so positioniert, daß die Wendeschneidplatten 27, 27' in Axialrichtung um einen im Zehntelmillimeterbereich liegenden Betrag gegeneinander versetzt sind. In Fig. 7 sind die Wendeschneidplatten 27, 27' in Umfangsrichtung übereinanderprojiziert dargestellt. Der Axialversatz ist so festgelegt, daß beide Wendeschneidplatten 27, 27' jeweils nur mit einer Hauptschneidkante 28', 29 sowie mit ihren Eckenschneidkanten 34', 34 aktiv sind. Die Überlappung der Wendeschneidplatten 27, 27' ist deshalb so festgelegt, daß beide Wendeschneidplatten 27, 27' gemeinsam eine Schneide für die Flankenbereiche der Vertiefung 13 und eine Doppelschneide im Zahnspitzenbereich 41 definieren. Die Schneidenzahl z beträgt deshalb im Bereich der schräg zu der Längsmittelachse 11 (Fig. 1) angeordneten Hauptschneidkante 28', 29 Eins, während die Schneidenzahl z im Bereich der parallel zu der Längsmittelachse 11 angeordneten Eckenschneidkante 34', 34 Zwei beträgt. Die Schneidenzahl ist deshalb in dem Zahnspitzenbereich 41 doppelt so groß wie in den unter 45° zur Längsmittelachse stehenden Flankenbereichen. Bei dem Profil-Schaftfräser 1 und einer in Fig. 7 senkrecht auf der Zeichenebene stehenden Vorschubrichtung bedeutet dies, daß die von den quer zur Vorschubrichtung angeordneten Schneiden 34', 34 definierte Schneidenzahl größer, d.h. doppelt so groß ist, wie die Schneidenzahl der unter einem spitzen Winkel zur Vorschubrichtung angeordneten Hauptschneidkanten 28', 29.

Es wird dadurch die in Fig. 7A idealisiert und schematisiert veranschaulichte Spanform erreicht. Der Span 42 weist bezüglich der in Fig. 7A durch einen Pfeil gekennzeichneten Vorschubrichtung 43 unterschiedliche Stärken auf. Im Zahnspitzenbereich 41 ist die Spanstärke S deutlich geringer als im Zahnflankenbereich. Im Zahnflankenbereich entspricht die Spanstärke S dem Vorschub pro Umdrehung, während die Spandicke S im Zahnspitzenbereich wegen der doppelten Schneidenzahl lediglich der halbe Vorschub pro Umdrehung ist. Der Vorschub (pro Umdrehung) ist in Fig. 7A mit f bezeichnet.

Jedoch stimmt die Spandicke D im Zahnspitzenbereich mit der Spanstärke S überein. Im Zahnflankenbereich ist die Spandicke D eine Winkelprojektion der Spanstärke S. Die Spandicke D ist deshalb im Flankenbereich geringer als die hier größere Spanstärke S. Im Ergebnis stimmen die Spandicke D im Zahnspitzenbereich 41 und Spandicke D im Zahnflankenbereich miteinander näherungsweise überein. Damit wird der im wesentlichen durch die Spandicke D bestimmte Verschleiß der Schneidkanten, d.h. der Schneidkanten 34', 28', aneinander angeglichen. Ein erhöhter Verschleiß im Zahnspitzenbereich tritt nicht auf. Gleiches gilt für die Wendeschneidplatte 27.

Der in Fig. 7A veranschaulichte Span ist im wesentlichen flach und somit flexibel. Es wird dadurch eine günstige Spanbildung erreicht. Dies wird durch das Wesen der Schneidengeometrie erreicht, das darin liegt, die Schneidenzahl für Schneidkanten, die unter einem spitzeren Winkel zur Vorschubrichtung 43 angeordnet sind, geringer zu halten als die Schneidenzahl von Schneidkanten, die in einem vergleichsweise größeren Winkel (quer) zu der Vorschubrichtung 43 arbeiten. Dies gilt sowohl für gerade als auch für gekrümmte Schneidkanten.

Koaxial zu der Längsmittelachse 11 ist der Werkzeugkörper 5 von einem Kühlmittelkanal 44 durchsetzt, der durch den Wendeplatten-Trägerabschnitt 9 zu den Bearbeitungsstellen, d.h. in die Spanräume 22, und damit zu den Wendeschneidplatten 27, 27' führt.

Der insoweit beschriebene Profil-Schaftfräser 1 arbeitet wie folgt:

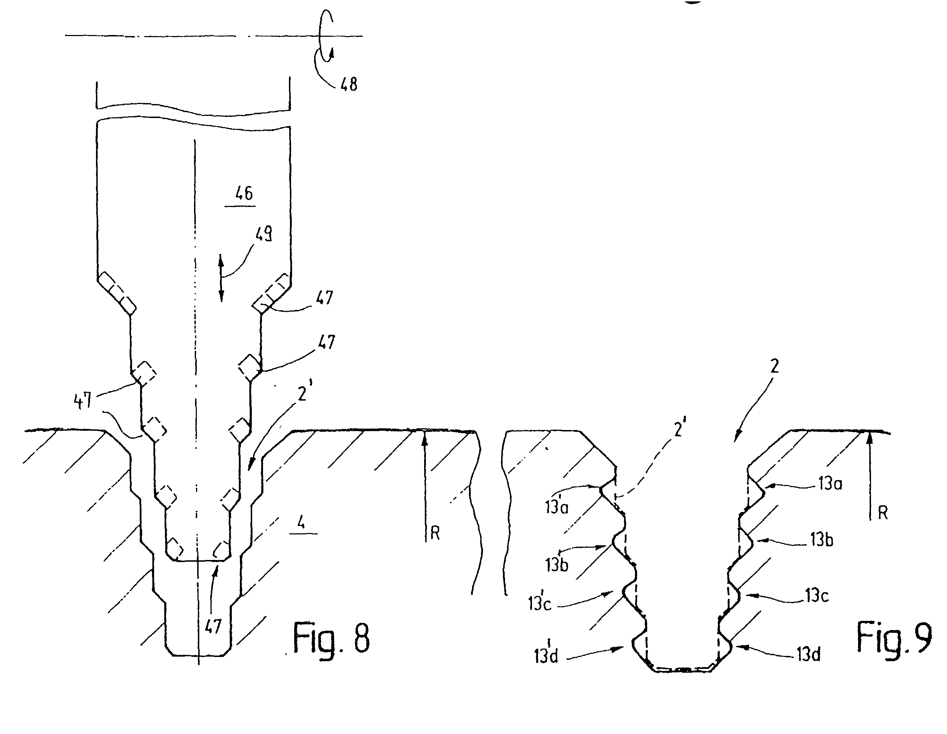

Zur Ausbildung der Nuten 2 an einem Turbinenrotor 3, wie er in Fig. 10 schematisch veranschaulicht ist, wird der betreffende Rohling zunächst auf einem Teilapparat aufgenommen. Mittels eines in Fig. 8 schematisch veranschaulichten Scheibenfräsers 46 wird in dem Abschnitt 4 des in Fig. 8 ausschnittsweise im Querschnitt veranschaulichten Turbinenrotors 3 eine hinterschneidungsfreie Nut 2' geöffnet. Der mit Wendeschneidplatten 47 bestückte Scheibenfräser 46 läuft dabei um eine Drehachse 48 um und wird, nachdem er in Richtung des Pfeiles 49 auf die gewünschte Tiefe eingestellt worden ist, in einer Vorschubbewegung in Längsrichtung der gewünschten Nut durch den Abschnitt 4 geführt. Dabei erzeugt der Scheibenfräser 46 die in Fig. 8 veranschaulichte, abgestufte Nut, deren Profil von den am weitesten nach innen vorstehenden Rippen 12a bis 12d des auszubildenden Nutprofiles bestimmt wird.

Nach dem Öffnen der Nut 2' wird der Profil-Schaftfräser 1 zur Durchführung eines Vorschlicht-Bearbeitungsschrittes, wie es in Fig. 2 dargestellt ist, so zwischen zwei Abschnitte 4 des Turbinenrotors 3 positioniert, daß er mit seiner Längsmittelachse 11 mit der Radialrichtung des Werkstückes übereinstimmt und symmetrisch zu einer vorgeöffneten Nut 2' vor deren Ende steht. In einer in Längsrichtung der auszubildenden Nut gerichteten Vorschubbewegung wird der sich drehende Profil-Schaftfräser 1 durch die Nut 2 geführt (Fig. 2), wobei er, wie in Fig. 9 dargestellt, in die grob vorgeöffnete Nut 2' die seitlichen Vertiefungen 13a bis 13d bzw. 13'a bis 13'd einfräst. Dies erfolgt in der in Fig. 7 veranschaulichten Weise mit einem im wesentlichen konstanten Aufmaß A zu der gewünschten Kontur 51 der fertig bearbeiteten Nut 2 sowohl im Zahnflankenbereich als auch im Zahnspitzenbereich 41. Aufgrund der größeren Schneidenzahl im Zahnspitzenbereich 41 im Vergleich zu den Schneidenzahlen in den Zahnflankenbereichen ist die Spandicke D an den aktiven Schneidkanten 28, 29, 34 jeder Wendeschneidplatte 27 im wesentlichen ausgeglichen oder konstant und somit ergibt sich insbesondere im Zahnspitzenbereich 41 keine erhöhte Zahnbelastung. Die Vorschubgeschwindigkeit kann deshalb maximiert werden, ohne die Zahnspitzen zu überlasten. Es sind Werte von bis zu 180 mm pro Minute erreichbar, was ein mehrfacher Wert des mit HSS-Fräsern erreichbaren Maximalvorschubes ist. Selbst verschleißmindernd beschichtete HSS-Fräser gestatten hier lediglich einen Vorschub von höchstens 80 mm pro Minute.

In einem letzten Bearbeitungsschritt wird eine Schlichtbearbeitung durchgeführt, bei der das konstante Aufmaß A auf die Kontur 51 mittels eines HSS-Fräsers entfernt wird. Dieser hat lediglich eine relativ geringe Zerspanungsleistung zu erbringen, wobei der Verschleiß infolge des konstanten Aufmaßes A über seine Schneidenlänge konstant gehalten werden kann. Der lediglich geringe, von dem HSS-Fräser geforderte Materialabtrag gestattet eine hohe Vorschubgeschwindigkeit beim Schlichten, so daß durch die zweistufige Bearbeitung beim Vorschlichten und Schlichten zunächst mit dem wendeschneidplattenbestückten Profil-Schaftfräser 1 und dem sich anschließenden Schlichtbearbeitungsvorgang mit einem HSS-Fräser eine sehr kurze Bearbeitungszeit erreichbar ist. Diese ist wesentlich geringer als bei Bearbeitung der vorgeöffneten Nut 2' lediglich mit einem HSS-Fräser.

Bedarfsweise kann das Aufmaß A im Zahnspitzenbereich 41 beim Vorschlichten der Nut 2 mit dem Profil-Schaftfräser 1 geringer eingestellt werden als das übrige Aufmaß A. Dies schont die Zahnspitzen des HSS-Profil-Schaftfräsers beim Schlichten oder ermöglicht eine höhere Vorschubgeschwindigkeit für diesen.

Aufgrund der aus Fig. 4 ersichtlichen Symmetrie der Wendeschneidplatten 27 können verschlissene Haupt- und Eckenschneidkanten 28-1, 29-1, 34-1 durch noch formhaltige Schneidkanten 28-2, 29-2, 34-2 ersetzt werden, indem die jeweilige Wendeschneidplatte 27 von ihrem Plattensitz gelöst, um 180° um ihre Mittelachse 32 gedreht und wieder an dem betreffenden Plattensitz 18, 25 befestigt wird. Außerdem sind die Wendeschneidplatten 27 untereinander austauschbar. Es wird dadurch sichergestellt, daß beim Vorschlichten jeweils ein festgelegtes einheitliches Profil erzeugt wird. Im Gegensatz dazu verändert sich die Profilform beim häufigen Nachschleifen von HSS-Profil-Schaftfräsern infolge der sich ergebenden Geometrieänderung des Fräsers. Darüber hinaus ist der Wechsel von Wendeschneidplatten einfacher und zeitsparender als der ansonsten erforderliche Nachschleifvorgang.

Bedarfsweise können die Wendeschneidplatten 27d in ihrer Form von den übrigen Wendeschneidplatten abweichend ausgebildet werden, um bspw. Nuten mit geringer Weite in Bodennähe bearbeiten zu können.

Bei der Herstellung von Rotornuten wird zwischen dem üblichen hinterschneidungsfreien Öffnen der Nut mittels eines Scheibenfräsers und dem Profilfräsen mittels HSS-Profil-Schaftfräsers, ein Vorschlichtbearbeitungsvorgang durchgeführt, bei dem die Profilform mit einem wendeschneidplattenbestückten Profil-Schaftfräser vorgearbeitet wird. Der dazu verwendete Profil-Schaftfräser zeichnet sich dadurch aus, daß er an seinen bspw. radial außenliegenden Zahnspitzen eine größere Schneidenzahl aufweist als an seinen schräggestellten Zahnflanken. Darüber hinaus sind die durch Überlappung in Umfangsrichtung von den Schneidkanten der Wendeschneidplatten definierten Schneiden unterbrochen, so daß sich im wesentlichen flache, wenig steife Späne ausbilden.

## Patentansprüche

1. Zerspanungswerkzeug (1) zur gleichzeitigen Bearbeitung oder Erzeugung von Flächen, die miteinander einen Winkel einschließen,
mit einem um eine Längsmittelachse (11) zu drehenden Werkzeugkörper (5),
mit wenigstens drei ortsfest zu dem Werkzeugkörper (5) angeordneten aktiven Schneidkanten (28', 34, 34'), die bei einer Drehung des Werkzeugkörpers (5) um seine Längsmittelachse (11) eine Umlauffigur definieren, deren Kontur bei der Verwendung des Zerspanungswerkzeugs (1) den zu bearbeitenden Flächen entspricht, und von denen wenigstens zwei (28', 34) mit der Längsmittelachse zwei unterschiedliche Spitze Winkel einschließen,
**dadurch gekennzeichnet, daß**
die Anzahl der eine gemeinsame Fläche definierenden, aktiven Schneidkanten (34, 34'), die mit der Längsmittelachse (11) einen kleineren Spitzen Winkel einschließen, größer ist als die Anzahl der aktiven, ebenfalls eine gemeinsame Flächen definierenden Schneidkanten (28') die mit der Drehachse einen vergleichsweise größeren Spitzen Winkel einschließen.

2. Zerspanungswerkzeug nach Anspruch 1, **dadurch gekennzeichnet, daß** die aktiven Schneidkanten (28', 34, 34') in ihrer in Umfangsrichtung vorgenommenen Projektion Schneiden definieren, die von der Geradenform abweichen.

3. Zerspanungswerkzeug nach Anspruch 2, **dadurch gekennzeichnet, daß** die Schneidenform wenigstens zwei Geradenabschnitte aufweist, die unter einem von 180° verschiedenen Winkel zueinander stehen.

4. Zerspanungswerkzeug nach Anspruch 2, **dadurch gekennzeichnet, daß** die Schneidenform wenigstens drei Geradenabschnitte aufweist, die paarweise unter einem von 180° verschiedenen Winkel zueinander stehen.

5. Zerspanungswerkzeug nach Anspruch 2, **dadurch gekennzeichnet, daß** die Schneidenform parallel zu der Längsmittelachse (11) angeordnete Abschnitte (34) und spitzwinklig zu der Längsmittelachse (11) angeordnete Abschnitte (28', 29) aufweist.

6. Zerspanungswerkzeug nach Anspruch 5, **dadurch gekennzeichnet, daß** die Schneidenzahl der parallel zu der Längsmittelachse (11) angeordneten Schneidenabschnitte (34, 34') größer ist als die Schneidenzahl der unter einem spitzen Winkel zu der Längsmittelachse (11) angeordneten Schneidenabschnitte (28'; 29).

7. Zerspanungswerkzeug nach Anspruch 6, **dadurch gekennzeichnet, daß** die Schneidenzahl der parallel zu der Längsmittelachse (11) angeordneten Schneidenabschnitte (34, 34') doppelt so groß ist wie die Schneidenzahl der unter einem spitzen Winkel zu der Längsmittelachse (11) angeordneten Schneidenabschnitte (28'; 29).

8. Zerspanungswerkzeug nach Anspruch 7, **dadurch gekennzeichnet, daß** die Schneidenzahl der parallel zu der Längsmittelachse (11) angeordneten zusammenwirkenden Schneidenabschnitte (34, 34') Zwei beträgt und daß die Schneidenzahl der unter einem spitzen Winkel zu der Längsmittelachse (11) angeordneten Schneidenabschnitte (28', 29) Eins beträgt.

9. Zerspanungswerkzeug nach Anspruch 1, **dadurch gekennzeichnet, daß** der Werkzeugkörper (5) mit Schneideinsätzen (27, 27') versehen ist, an denen die Schneidkanten (28', 34', 29, 34) ausgebildet sind.

10. Zerspanungswerkzeug nach Anspruch 9, **dadurch gekennzeichnet, daß** die Schneideinsätze (27) Wendeschneidplatten sind.

11. Zerspanungswerkzeug nach Anspruch 10, **dadurch gekennzeichnet, daß** an dem Werkzeugkörper (5) Plattensitze (18, 25) für die Wendeschneidplatten (27) ausgebildet sind, an denen die Wendeschneidplatten (27) mittels lösbarer Befestigungsmittel gehalten sind.

12. Zerspanungswerkzeug nach Anspruch 10, **dadurch gekennzeichnet, daß** die Wendeschneidplatten (27) derart angeordnet sind, daß an jeder Wendeschneidplatte (27) jeweils nur eine Hauptschneidkante (28' oder 29) sowie eine an diese anschließende Eckenschneidkante (34' oder 34) aktiv ist.

13. Zerspanungswerkzeug nach Anspruch 10, **dadurch gekennzeichnet, daß** die von den Schneidkanten (28', 34'; 34, 29) der Wendeschneidplatten (27) definierten Schneiden abschnittsweise unterteilt sind.

14. Zerspanungswerkzeug nach Anspruch 12 und 13, **dadurch gekennzeichnet, daß** Wendeschneidplatten (27), deren aktive Schneidkanten (28', 34'; 34, 29) benachbarte Abschnitte der Schneide definieren, untereinander gleich ausgebildet sind.

15. Zerspanungswerkzeug nach Anspruch 10, **dadurch gekennzeichnet, daß** die Wendeschneidplatten (27) bzw. deren Plattensitze (18, 25) einer Spiral- oder Schraubenlinie folgend angeordnet sind.

16. Zerspanungswerkzeug nach Anspruch 10, **dadurch gekennzeichnet, daß** jeder Wendeschneidplatte (27) ein eigener Spanraum (22) zugeordnet ist.

17. Zerspanungswerkzeug nach Anspruch 16, **dadurch gekennzeichnet, daß** die Spanräume (22) voneinander getrennt sind.

18. Zerspanungswerkzeug nach Anspruch 16, **dadurch gekennzeichnet, daß** an dem Werkzeugkörper (5) zwischen den Spanräumen (22) benachbarter Wendeschneidplatten (27) Versteifungsrippen (23) ausgebildet sind.

19. Zerspanungswerkzeug nach Anspruch 1, **dadurch gekennzeichnet, daß** der Werkzeugkörper (5) mit Kanälen (12) zur Kühlmittelzufuhr versehen ist.

20. Verfahren zur Herstellung hinterschnittener Nuten, insbesondere Nuten an Turbinenrotoren zur Befestigung von Turbinenschaufeln, wobei zu dem Verfahren die folgenden Schritte gehören:
Öffnen der Nut, indem mit einem Scheibenfräser eine grob vorgeformte Nut mit einem hinterschneidungsfreien Profil in das Werkstück eingefräst wird,
Vorschlichten der Nut mit einem Profilschaftfräser mit den Merkmalen eines des Ansprüche 1 bis 19, indem zur Ausbildung der Hinterschneidungen mit konstantem Aufmaß zu der gewünschten Nut der mit Wendeschneidplatten bestückte Profil-Schaftfräser in Längsrichtung durch die vorgeöffnete Nut geführt wird,
Schlichten der Nut, indem ein HSS-Profil-Schaftfräser in Längsrichtung durch die vorgeschlichtete Nut geführt wird.

21. Verfahren nach Anspruch 20, **dadurch gekennzeichnet, daß** die vorgeöffnete Nut beim Vorschlichten auf ein im wesentlichen konstantes Aufmaß A bezüglich des beim Schlichten zu erzeugenden Sollmaßes gefräst wird.

22. Verfahren nach Anspruch 20, **dadurch gekennzeichnet, daß** beim Vorschlichten bezüglich einer beim Schlichten zu erzeugenden Nutkontur ein Aufmaß A eingehalten wird, das im Zahnspitzenbereich des Profil-Schaftfräsers geringer ist als in den übrigen Bereichen.

## Claims

1. Cutting tool (1) for the simultaneous machining or generation of surfaces which enclose an angle with one another,
with a tool body (5) to be rotated around a longitudinal central axis (11),
with at least three active cutting edges (28', 34, 34'), which are arranged to be fixed relative to the tool body (5) and which, during a rotation of the tool body (5) around its longitudinal central axis (11), define a pattern of rotation, the contour of which, during use of the cutting tool (1), corresponds to the surfaces to be machined, at least two of said cutting edges (28', 34) enclosing two different acute angles with the longitudinal central axis,
**characterised in that**
the number of active cutting edges (34, 34') defining a common surface, which enclose a smaller acute angle with the longitudinal central axis (11), is greater than the number of active cutting edges (28') likewise defining a common surface, which enclose a comparatively larger acute angle with the rotational axis.

2. Cutting tool according to Claim 1, **characterised in that**, in their projection performed in circumferential direction, the active cutting edges (28', 34, 34') define cutters which deviate from the straight form.

3. Cutting tool according to Claim 2, **characterised in that** the cutter form has at least two straight sections, which stand at an angle differing 180° to one another.

4. Cutting tool according to Claim 2, **characterised in that** the cutter form has at least three straight sections, which stand in pairs at an angle differing from 180° to one another.

5. Cutting tool according to Claim 2, **characterised in that** the cutter form has sections (34) arranged parallel to the longitudinal central axis (11) and sections (28', 29) arranged at an acute angle to the longitudinal central axis (11).

6. Cutting tool according to Claim 5, **characterised in that** the number of cutters of the cutter sections (34, 34') arranged parallel to the longitudinal central axis (11) is greater than the number of cutters of the cutter sections (28'; 29) arranged at an acute angle to the longitudinal central axis (11).

7. Cutting tool according to Claim 6, **characterised in that** the number of cutters of the cutter sections (34, 34') arranged parallel to the longitudinal central axis (11) is double the number of cutters of the cutter sections (28'; 29) arranged at an acute angle to the longitudinal central axis (11).

8. Cutting tool according to Claim 7, **characterised in that** the number of cutters of the interacting cutter sections (34, 34') arranged parallel to the longitudinal central axis (11) amounts to two, and that the number of cutters of the cutter sections (28', 29) arranged at an acute angle to the longitudinal central axis (11) amounts to one.

9. Cutting tool according to Claim 1, **characterised in that** the tool body (5) is provided with cutter inserts (27, 27'), on which the cutting edges (28', 34', 29, 34) are formed.

10. Cutting tool according to Claim 9, **characterised in that** the cutter inserts (27) are reversible cutting plates.

11. Cutting tool according to Claim 10, **characterised in that** plate seats (18, 25) are formed on the tool body (5) for the reversible cutting plates (27), on which the reversible cutting plates (27) are held by means of detachable fastening means.

12. Cutting tool according to Claim 10, **characterised in that** the arrangement of the reversible cutting plates (27) is such that on each reversible cutting plate (27) respectively only one main cutting edge (28' or 29) is active as well as one corner cutting edge (34' or 34) adjoining this.

13. Cutting tool according to Claim 10, **characterised in that** the cutters defined by the cutting edges (28', 34'; 34, 29) of the reversible cutting plates (27) are divided into sections.

14. Cutting tool according to Claim 12 and 13, **characterised in that** reversible cutting plates (27) whose active cutting edges (28', 34'; 34, 29) define adjacent sections of the cutter are each of the same configuration.

15. Cutting tool according to Claim 10, **characterised in that** the reversible cutting plates (27) or their plate seats (18, 25) are arranged to follow a spiral or helical line.

16. Cutting tool according to Claim 10, **characterised in that** each reversible cutting plate (27) is assigned its own rake space (22).

17. Cutting tool according to Claim 16, **characterised in that** the rake spaces (22) are separated from one another.

18. Cutting tool according to Claim 16, **characterised in that** reinforcement ribs (23) are formed on the tool body (5) between the rake spaces (22) of adjacent reversible cutting plates (27).

19. Cutting tool according to Claim 1, **characterised in that** the tool body (5) is provided with channels (12) for the supply of coolant.

20. Process for the production of undercut grooves, in particular grooves on turbine rotors for securing turbine blades, wherein the following steps are part of the process:
opening of the groove by milling a coarsely preformed groove with a profile free from undercuts into the work piece using a disc milling cutter;
first-finishing of the groove with a profile end mill with the features of one of Claims 1 to 19 by directing the profile end mill longitudinally through the pre-opened groove in order to form the undercuts with a constant excess dimension to the desired groove;
finishing the groove by directing a superspeed steel profile end mill longitudinally through the first-finished groove.

21. Process according to Claim 20, **characterised in that** during first-finishing, the pre-opened groove is milled to an essentially constant excess dimension A relative to the desired dimension to'be generated during finishing.

22. Process according to Claim 20, **characterised in that** during first-finishing, an excess dimension A relative to a groove contour to be generated during finishing is adhered to which is smaller in the region of the tooth tips of the profile end mill than in the other regions.

## Revendications

1. Outil (1) à enlèvement de copeaux pour l'usinage et la génération simultanés de surfaces formant un angle entre elles,
avec un corps d'outil (5) qui peut être mis en rotation autour d'un axe médian longitudinal (11),
avec au moins trois arêtes de coupe (28', 34, 34') actives, stationnaires par rapport au corps d'outil (5), qui, lors d'une rotation du corps d'outil (2) autour de son axe médian longitudinal (11), définissent une figure de révolution dont le contour, lorsqu'on utilise l'outil d'usinage par enlèvement de copeaux (1), correspond aux surfaces à usiner, et parmi lesquelles au moins deux arêtes de coupe (28', 34) forment deux angles aigus différents avec l'axe médian longitudinal
**caractérisé en ce que**
le nombre des arêtes de coupe (34, 34') actives définissant une surface commune, qui forment un angle aigu relativement petit avec l'axe médian longitudinal (11) est supérieur au nombre des arêtes de coupe (28') actives, définissant une surface commune, qui forment un angle aigu comparativement plus grand avec l'axe de rotation.

2. Outil à enlèvement de copeaux selon la revendication 1, **caractérisé en ce que** les arêtes de coupe (28', 34, 34') actives, dans leur projection dans la direction périphérique, définissent des taillants dont la forme s'écarte de la forme rectiligne.

3. Outil à enlèvement de copeaux selon la revendication 2, **caractérisé en ce que** la forme du taillant comprend au moins deux portions rectilignes, qui forment entre elles un angle différent de 180°.

4. Outil à enlèvement de copeaux selon la revendication 2, **caractérisé en ce que** la forme du taillant comporte au moins trois portions rectilignes qui forment entre elles, deux à deux, un angle différent de 180°.

5. Outil à enlèvement de copeaux selon la revendication 2, **caractérisé en ce que** la forme du taillant comporte des portions (34) disposées parallèlement à l'axe médian longitudinal (11) et des portions (28', 29) disposées suivant un angle aigu par rapport à l'axe médian longitudinal (11).

6. Outil à enlèvement de copeaux selon la revendication 5, **caractérisé en ce que** le nombre de taillants des portions (34, 34') disposées parallèlement à l'axe médian longitudinal (11) est supérieur au nombre de taillants des portions (28', 29) disposées suivant un angle aigu par rapport à l'axe médian longitudinal (11).

7. Outil à enlèvement de copeaux selon la revendication 6, **caractérisé en ce que** le nombre de taillants des portions (34, 34'), disposées parallèlement à l'axe médian longitudinal (11) est double du nombre de taillants des portions (28', 29) disposées suivant un angle aigu par rapport à l'axe médian longitudinal (11).

8. Outil à enlèvement de copeaux selon la revendication 7, **caractérisé en ce que** le nombre de taillants des portions (34, 34') coopérant les unes avec les autres, disposées parallèlement à l'axe médian longitudinal (11), est de deux et **en ce que** le nombre de taillants des portions (28'; 29) disposées suivant un angle aigu par rapport à l'axe. médian longitudinal (11) est de un.

9. Outil à enlèvement de copeaux selon la revendication 1, **caractérisé en ce que** le corps d'outil (1) est muni d'inserts de coupe (27, 27') sur lesquels sont aménagées les arêtes de coupe (28', 34', 29, 34).

10. Outil à enlèvement de copeaux selon la revendication 9, **caractérisé en ce que** les inserts de coupe (27) sont des plaquettes de coupe amovibles.

11. Outil à enlèvement de copeaux selon la revendication 10, **caractérisé en ce que** des logements de plaquettes (18, 25) pour les plaquettes amovibles (27) sont aménagés dans le corps d'outil (5), logements dans lesquels les plaquettes de coupe amovibles (27) sont tenues par des moyens de fixation démontables.

12. Outil à enlèvement de copeaux selon la revendication 10, **caractérisé en ce que** les plaquettes de coupe amovibles (27) sont disposées de manière telle que sur chaque plaquette de coupe (27) seulement une arête de coupe principale (28' ou 29) et seulement une pointe de coupe (34' ou 34) consécutive à celle-ci soit actives chaque fois.

13. Outil à enlèvement de copeaux selon la revendication 10, **caractérisé en ce que** les taillants définis par les arêtes de coupe (28', 34', 34, 29) des plaquettes de coupe amovibles (27) sont divisés en portions.

14. Outil à enlèvement de copeaux selon les revendications 2 et 3, **caractérisé en ce que** les plaquettes de coupe amovibles (27), dont les arêtes de coupe (28', 34', 29, 34) actives définissent des portions voisines du taillant, sont identiques entre elles.

15. Outil à enlèvement de copeaux selon la revendication 10, **caractérisé en ce que** les plaquettes de coupe amovibles (27) ou les logements de plaquettes (18, 25) sont disposés suivant une spirale ou suivant une hélice.

16. Outil à enlèvement de copeaux selon la revendication 10, **caractérisé en ce qu'**à chaque plaquette de coupe amovible (27) est associée une chambre à copeaux (22) individuelle.

17. Outil à enlèvement de copeaux selon la revendication 16, **caractérisé en ce que** les chambres à copeaux (22) sont séparées les unes des autres.

18. Outil à enlèvement de copeaux selon la revendication 16, **caractérisé en ce que** des nervures de rigidification (23) sont aménagées sur le corps d'outil (5), entre les chambres à copeaux (22) de plaquettes de coupe amovibles (27) voisines.

19. Outil à enlèvement de copeaux selon la revendication 1, **caractérisé en ce que** le corps d'outil (5) est pourvu de canaux (12) pour l'alimentation en liquide de refroidissement.

20. Procédé de fabrication de rainures en contre-dépouille, en particulier sur des rotors de turbines, pour la fixation des aubes de turbine, le procédé comprenant les étapes suivantes :
ouverture de la rainure, en fraisant dans la pièce, à l'aide d'une fraise disque, une rainure grossièrement ébauchée avec un profil sans contre-dépouille,
semi-finition de la rainure à l'aide d'une fraise profilée à deux tailles présentant les caractéristiques selon une des revendications 1 à 19, en déplaçant la fraise profilée à deux tailles équipée de plaquettes de coupe amovibles dans la direction longitudinale dans la rainure pré-ouverte, pour façonner les contre-dépouilles avec une surdimension constante par rapport à la rainure souhaitée,
finition de la rainure en déplaçant une fraise profilée à deux tailles en acier rapide dans la direction longitudinale dans la rainure préusinée.

21. Procédé selon la revendication 20,**caractérisé en ce que**, lors de la semifinition, la rainure pré-ouverte est fraisée avec une surdimension A essentiellement constante par rapport à la cote de consigne à obtenir lors de la finition.

22. Procédé selon la revendication 20,**caractérisé en ce que**, lors de la semi-finition, on respecte une surdimension A par rapport à un contour de rainure à produire à la finition, surdimension qui et plus faible dans la région de la pointe de dent de la fraise que dans les autres régions.
